(19) Europäisches Patentamt
European Patent Office
Office européen des brevets

(11) **EP 4 495 183 A1**

(12) **EUROPEAN PATENT APPLICATION**
published in accordance with Art. 153(4) EPC

(43) Date of publication:
**22.01.2025 Bulletin 2025/04**

(21) Application number: **23770765.8**

(22) Date of filing: **14.03.2023**

(51) International Patent Classification (IPC):
*C08L 53/02* (2006.01)    *C08L 23/00* (2006.01)
*C08L 23/08* (2025.01)

(52) Cooperative Patent Classification (CPC):
**C08L 23/00; C08L 23/08; C08L 53/02**

(86) International application number:
**PCT/JP2023/009772**

(87) International publication number:
**WO 2023/176810 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.03.2022 JP 2022044259**

(71) Applicant: **Mitsui Chemicals, Inc.**
**Tokyo 104-0028 (JP)**

(72) Inventors:
• YAMAMOTO, Kanji
  Sodegaura-shi, Chiba 299-0265 (JP)
• NAKATSUJI, Ryo
  Sodegaura-shi, Chiba 299-0265 (JP)
• JITSUKATA, Masakazu
  Sodegaura-shi, Chiba 299-0265 (JP)
• SUGAWARA, Kaisei
  Sodegaura-shi, Chiba 299-0265 (JP)

(74) Representative: Hoffmann Eitle
Patent- und Rechtsanwälte PartmbB
Arabellastraße 30
81925 München (DE)

(54) **THERMOPLASTIC ELASTOMER COMPOSITION AND METHOD FOR PRODUCING THERMOPLASTIC ELASTOMER COMPOSITION**

(57)    An object of the present disclosure is to provide a thermoplastic elastomer composition having excellent scratch resistance and being capable of forming a low gloss appearance and a method for producing a thermoplastic elastomer composition. The present disclosure provides a thermoplastic elastomer composition including a first composition containing an olefin-based resin (A), an ethylene/$\alpha$-olefin copolymer (B), and a crosslinking agent (F), and a second composition containing a hydrogenated product (C) of a block copolymer having at least one block mainly including a conjugated diene monomer unit and at least one block mainly including a vinyl aromatic monomer unit, wherein the content of the component (B) is 10 to 180 parts by mass based on 100 parts by mass of the component (A); the content of the component (C) is 170 to 500 parts by mass based on 100 parts by mass of the component (A); and a ratio $W_1/W_0$ is 0.01 to 0.70, where $W_0$ denotes the sum of a content rate of the component (B) and a content rate of the component (C), and $W_1$ denotes a gel content, and also provides a method for producing the thermoplastic elastomer composition.

**EP 4 495 183 A1**

**Description**

Technical Field

The present disclosure relates to a thermoplastic elastomer composition and a method for producing a thermoplastic elastomer composition.

Background Art

A thermoplastic elastomer composition obtained by so-called dynamic crosslinking, in which a radically crosslinkable elastomer and a radically non-crosslinkable resin such as polypropylene are crosslinked while being melt-kneaded in an extruder in the presence of a radical initiator, is well known technology and widely used in applications such as automobile parts.

As such a thermoplastic elastomer composition, Patent Literature 1 discloses a thermoplastic elastomer composition containing, for example, an ethylene/$\alpha$-olefin copolymer and an olefin-based resin as a thermoplastic elastomer composition containing a hydrogenated product of a block copolymer having a vinyl aromatic monomer unit.

Patent Literature 2 discloses a rubber composition containing a crosslinked product composed of an ethylene/$\alpha$-olefin copolymer having a crosslinking degree of 50% or more and an olefin-based resin, and a thermoplastic elastomer added later.

Furthermore, Patent Literature 3 discloses a polymer composition in which a polyphenylene ether is blended into a crosslinked thermoplastic-crosslinked rubber composition composed of a crosslinkable rubber polymer and a thermoplastic resin which is an olefin-based resin and/or a styrene-based resin.

Citation List

Patent Literature

[Patent Literature 1] WO2010/067564
[Patent Literature 2] WO00/061681
[Patent Literature 3] JP2008-007589A

Summary of Invention

Technical Problem

However, a thermoplastic elastomer composition used for an interior material of an automobile part, which particularly requires to have a soft texture, has been required to further improve scratch resistance and to be able to form a low gloss appearance.

In view of such requirements, there is room for improvement in the balance between scratch resistance and low gloss appearance formation of the compositions described in Patent Literatures 1, 2, and 3.

The present disclosure provides a thermoplastic elastomer composition that is suitable for obtaining a molded body having excellent scratch resistance and being capable of forming a low gloss appearance. The present disclosure also provides a method for producing a thermoplastic elastomer composition having excellent scratch resistance and being capable of forming a low gloss appearance.

Solution to Problem

Specifically, the present disclosure relates to the following [1] to [6].

[1] A thermoplastic elastomer composition comprising a first composition and a second composition, wherein

a content of an ethylene/$\alpha$-olefin copolymer (B) contained in the thermoplastic elastomer composition is 10 to 180 parts by mass based on 100 parts by mass of an olefin-based resin (A);
a content of a hydrogenated product (C) of a block copolymer having at least one block mainly including a conjugated diene monomer unit and at least one block mainly including a vinyl aromatic monomer unit contained in the thermoplastic elastomer composition is 170 to 500 parts by mass based on 100 parts by mass of the olefin-based resin (A); and

a ratio Wi/Wo is 0.01 to 0.70, where Wo (% by mass) denotes a sum of a content rate of the ethylene/$\alpha$-olefin copolymer (B) and a content rate of the hydrogenated product (C) in the thermoplastic elastomer composition, and $W_1$ (% by mass) denotes a gel content in the thermoplastic elastomer composition:

[First Composition]
a composition comprising the olefin-based resin (A), the ethylene/$\alpha$-olefin copolymer (B), and a crosslinking agent (F), and
[Second Composition]
a composition comprising the hydrogenated product (C) of a block copolymer having at least one block mainly including a conjugated diene monomer unit and at least one block mainly including a vinyl aromatic monomer unit, wherein the content of the hydrogenated product (C) contained in the second composition is 30 parts by mass or more based on 100 parts by mass of the olefin-based resin (A) contained in the thermoplastic elastomer composition.

[2] The thermoplastic elastomer composition according to item [1], wherein the hydrogenated product (C) is a styrenic block copolymer.
[3] The thermoplastic elastomer composition according to item [1] or [2], wherein the content of the hydrogenated product (C) contained in the thermoplastic elastomer composition is 180 to 250 parts by mass based on 100 parts by mass of the olefin-based resin (A).
[4] The thermoplastic elastomer composition according to any one of items [1] to [3], wherein

the first composition is obtained by melt-kneading the olefin-based resin (A), the ethylene/$\alpha$-olefin copolymer (B), and the crosslinking agent (F), and
the thermoplastic elastomer composition is obtained by melt-kneading the first composition and the second composition.

[5] A method for producing a thermoplastic elastomer composition, comprising (i) or (ii):

(i) a step of dynamically crosslinking an olefin-based resin (A) and an ethylene/$\alpha$-olefin copolymer (B) with a crosslinking agent (F), followed by addition of a hydrogenated product (C) at a subsequent stage of the same extruder for melt-kneading, and then taking out the thermoplastic elastomer composition from the extruder; or
(ii) a step of dynamically crosslinking an olefin-based resin (A) and an ethylene/$\alpha$-olefin copolymer (B) with a crosslinking agent (F), taking out a crosslinked product from an extruder after completion of a crosslinking reaction, and melting the crosslinked product and a hydrogenated product (C) again, followed by extrusion to obtain a thermoplastic elastomer composition, wherein

a content of the ethylene/$\alpha$-olefin copolymer (B) contained in the thermoplastic elastomer composition is 10 to 180 parts by mass based on 100 parts by mass of the olefin-based resin (A);
a content of the hydrogenated product (C) contained in the thermoplastic elastomer composition is 170 to 500 parts by mass based on 100 parts by mass of the olefin-based resin (A); and
a ratio Wi/Wo is 0.01 to 0.70, where Wo (% by mass) denotes a sum of a content rate of the ethylene/$\alpha$-olefin copolymer (B) and a content rate of the hydrogenated product (C) in the thermoplastic elastomer composition, and $W_1$ (% by mass) denotes a gel content in the thermoplastic elastomer composition.

[6] An instrument panel skin comprising the composition according to item [1].

Advantageous Effects of Invention

According to the present disclosure, it is possible to provide a thermoplastic elastomer composition having excellent scratch resistance and being capable of forming a low gloss appearance. According to the present disclosure, it is also possible to provide a method for producing a thermoplastic elastomer composition having excellent scratch resistance and being capable of forming a low gloss appearance.

Description of Embodiments

In the present disclosure, the expressions "XX or more and YY or less" and "XX to YY", which indicate numerical ranges, each mean a numerical range including the lower limit and upper limit which are end points, unless otherwise specified.

When numerical ranges are provided in stages, the upper limit and lower limit of each numerical range may be combined arbitrarily.

The expression of "A and/or B" is a concept including the case of A, the case of B, and the case of both A and B.

<Olefin-based resin (A)>

An olefin-based resin (A) (hereinafter sometimes referred to as a "component (A)"), one of the components contained in the first composition of the thermoplastic elastomer composition of the present disclosure, is not particularly limited as long as it is a crystalline polymer (resin) obtained from olefins, and is preferably a polymer composed of a crystalline high-molecular-weight solid product obtained by polymerizing one or more olefins through either a high-pressure method or a low-pressure method.

The olefin-based resin (A) may be used singly or in combination of two or more thereof.

Examples of the olefins used as raw materials of the component (A) according to the present disclosure include ethylene, propylene, 1-butene, 1-pentene, 1-hexene, 1-octene, 1-decene, 2-methyl-1-propene, 3-methyl-1-pentene, 4-methyl-1-pentene, and 5-methyl-1-hexene. These olefins may be used singly or as a mixture of two or more thereof.

Among such olefin-based resins (A), a propylene polymer is preferred from the viewpoint of heat resistance and oil resistance.

The propylene polymer according to the present disclosure refers to a polymer in which the content of a constituent unit derived from propylene among constituent units constituting the polymer is 50 mol% or more, and the content of the constituent unit derived from propylene in the component (A) is preferably 90 mol% or more.

The propylene polymer according to the present disclosure may be of one type or two or more types.

The propylene polymer according to the present disclosure may be a propylene homopolymer or a copolymer of propylene and a comonomer other than propylene, and is preferably a propylene homopolymer.

The structure of the propylene polymer according to the present disclosure is not particularly limited, and for example, a constituent unit moiety derived from propylene may have an isotactic structure, a syndiotactic structure, or an atactic structure. In addition, the copolymer may be any one of a random type (also referred to as random PP), a block type (also referred to as block PP: bPP), and a graft type.

The comonomer may be another monomer copolymerizable with propylene and is preferably an $\alpha$-olefin having 2 or 4 to 10 carbon atoms. Specific examples thereof include ethylene, 1-butene, 1-pentene, 4-methyl-1-pentene, 1-hexene, 1-heptene, 1-octene, 1-nonene, and 1-decene. Among these, ethylene, 1-butene, 1-pentene, 4-methyl-1-pentene, 1-hexene, 1-heptene, and 1-octene are preferable. These comonomers may be used singly or in combinations of two or more thereof.

The content of the constituent unit derived from the comonomer in the copolymer is preferably 10 mol% or less from the viewpoint of, for example, flexibility.

The propylene polymer according to the present disclosure may be synthesized by a conventionally known method, or may be a commercially available product. Examples of the commercially available product include polypropylene manufactured by SunAllomer Ltd., Prime Polypro manufactured by Prime Polymer Co., Ltd., NOVATEC manufactured by Japan Polypropylene Corporation, and SCG PP manufactured by SCG Plastics.

The propylene polymer according to the present disclosure may be a crystalline polymer or a non-crystalline polymer. Here, the term "crystalline" means that a melting point (Tm) is observed by differential scanning calorimetry (DSC).

When the propylene polymer according to the present disclosure is a crystalline polymer, a melting point thereof (in accordance with the measurement method of JIS K 7121) is preferably 100°C or higher, more preferably 120°C or higher from the viewpoint of, for example, heat resistance, and preferably 180°C or lower, and more preferably 170°C or lower.

The MFR (according to the method of measurement of ASTM D 1238-65T, 230°C, 2.16 kg load) of the component (A) according to the present disclosure is preferably 0.1 to 100 g/10 min, and more preferably 0.1 to 50 g/10 min.

The MFR of the component (A) according to the present disclosure in the above range can easily attain a composition having excellent heat resistance, mechanical strength, flowability, and forming processability.

<Ethylene/$\alpha$-olefin copolymer (B)>

An ethylene/$\alpha$-olefin copolymer (B), one of the components contained in the first composition of the thermoplastic elastomer composition of the present disclosure, is an ethylene/$\alpha$-olefin copolymer including a unit derived from ethylene and a unit derived from an $\alpha$-olefin.

The ethylene/$\alpha$-olefin copolymer (B) (hereinafter sometimes referred to as a "component (B)") according to the present disclosure can be obtained by copolymerizing at least ethylene and an $\alpha$-olefin. The number of carbon atoms of the α-olefin is not particularly limited, and is preferably 3 to 20.

Examples of the α-olefin having 3 to 20 carbon atoms include propylene, 1-butene, 1-pentene, 1-hexene, 4-methyl-1-pentene, 1-heptene, 1-octene, 1-nonene, 1-decene, 1-undecene, and 1-dodecene. Among these, from the viewpoint of imparting flexibility, an α-olefin having 5 to 12 carbon atoms is preferable, propylene, 1-butene, and 1-octene are more preferable, and 1-octene is further preferable.

The component (B) according to the present disclosure usually includes 70 to 99 mol%, preferably 80 to 97 mol%, of the unit derived from ethylene, and 1 to 30 mol%, preferably 3 to 20 mol%, of the unit derived from an α-olefin (provided that the total content of the unit derived from ethylene and the unit derived from an α-olefin is 100 mol%). A content proportion of the unit derived from ethylene is preferably in the above range in order to obtain a thermoplastic elastomer composition having excellent mechanical strength.

If necessary, a monomer having an unsaturated bond can be copolymerized with the component (B) according to the present disclosure. Preferred examples of the monomer having an unsaturated bond include conjugated diolefins such as butadiene and isoprene; non-conjugated diolefins such as 1,4-hexadiene; cyclic diene compounds such as dicyclopentadiene and a norbornene derivative; and acetylenes. Among these, ethylidene norbornene (ENB) and dicyclopentadiene (DCPD) are more preferable from the viewpoint of flexibility.

The component (B) according to the present disclosure usually has an MFR (ASTM D1238 at a load of 2.16 kg, a temperature of 190°C) in the range of 0.1 to 20 g/10 min and preferably 0.3 to 10 g/10 min.

This range of MFR ensures that the thermoplastic elastomer composition has a better balance between flowability and mechanical strength.

The component (B) according to the present disclosure usually has a density in the range of 0.8 to 0.9 g/cm$^3$.

The component (B) according to the present disclosure can be produced using a known polymerization catalyst, for example, a Ziegler-Natta catalyst, a vanadium catalyst, or a metallocene catalyst. The polymerization method is not particularly limited, and polymerization can be performed by liquid-phase polymerization methods such as solution polymerization, suspension polymerization, and bulk polymerization, gas-phase polymerization methods, or other known polymerization methods. These copolymers are not limited as long as they exhibit the effects of the present disclosure, which are also available as commercial products. Examples of the commercially available products include trade name ENGAGE 8842 (ethylene-1-octene copolymer) manufactured by The Dow Chemical Company; Vistalon (registered trademark) manufactured by ExxonMobil Chemical Company; ESPRENE (registered trademark) manufactured by Sumitomo Chemical Co., Ltd.; and MITSUI EPT (registered trademark), TAFMER P (registered trademark), and TAFMER A (registered trademark) manufactured by Mitsui Chemicals, Inc.

<Crosslinking agent (F)>

A crosslinking agent (F), one of the components contained in the first composition of the thermoplastic elastomer composition of the present disclosure, is not particularly limited as long as it is a compound capable of crosslinking the ethylene/α-olefin copolymer (B), and is preferably an organic peroxide.

Specific examples of the organic peroxide include peroxyketals such as 1,1-bis(t-butylperoxy)-3,3,5-trimethylcyclohexane, 1,1-bis(t-hexylperoxy)-3,3,5-trimethylcyclohexane, 1,1-bis(t-hexylperoxy)cyclohexane, 1,1-bis(t-butylperoxy)cyclododecane, 1,1-bis(t-butylperoxy)cyclohexane, 2,2-bis(t-butylperoxy)octane, n-butyl-4,4-bis(t-butylperoxy)butane, and n-butyl-4,4-bis(t-butylperoxy)valerate; dialkyl peroxides such as di-t-butyl peroxide, dicumyl peroxide, t-butylcumyl peroxide, α,α'-bis(t-butylperoxy-m-isopropyl)benzene, α,α'-bis(t-butylperoxy)diisopropylbenzene, 2,5-dimethyl-2,5-bis(t-butylperoxy)hexane, and 2,5-dimethyl-2,5-bis(t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichlorobenzoyl peroxide, and m-tolyoyl peroxide; peroxyesters such as t-butyl peroxyacetate, t-butyl peroxyisobutyrate, t-butyl peroxy-2-ethylhexanoate, t-butyl peroxylaurylate, t-butyl peroxybenzoate, di-t-butyl peroxyisophthalate, 2,5-dimethyl-2,5-di(benzoylperoxy)hexane, t-butyl peroxymaleic acid, t-butyl peroxyisopropyl carbonate, and cumyl peroxyoctate; and hydroperoxides such as t-butyl hydroperoxide, cumene hydroperoxide, diisopropylbenzene hydroperoxide, 2,5-dimethylhexane-2,5-dihydroperoxide, and 1,1,3,3-tetramethylbutyl peroxide.

Among these components (F), 1,1-bis(t-butylperoxy)-3,3,5-trimethylcyclohexane, di-t-butyl peroxide, dicumyl peroxide, 2,5-dimethyl-2,5-bis(t-butylperoxy)hexane, and 2,5-dimethyl-2,5-bis(t-butylperoxy)hexyne-3 are preferable from the viewpoint of, for example, thermal decomposition temperature and crosslinking performance.

These may be used singly or in combinations of two or more thereof as the component (F) according to the present disclosure.

When the thermoplastic elastomer composition of the present disclosure contains the component (F), it is preferable to use a crosslinking aid below in combination.

<Crosslinking aid (G)>

Examples of the crosslinking aid (G) according to the present disclosure include various known crosslinking aids, specifically, a monofunctional monomer and a polyfunctional monomer. Such a crosslinking aid can control the rate of crosslinking reaction.

Examples of the monofunctional monomer preferably include a radically polymerizable vinyl monomer and include an aromatic vinyl monomer, an unsaturated nitrile monomer such as acrylonitrile and methacrylonitrile, an acrylic acid ester monomer, a methacrylic acid ester monomer, an acrylic acid monomer, a methacrylic acid monomer, a maleic anhydride monomer, and an N-substituted maleimide monomer.

Specific examples of the monofunctional monomer include styrene, methylstyrene, chloromethylstyrene, hydroxystyrene, tert-butoxystyrene, acetoxystyrene, chlorostyrene, acrylonitrile, methacrylonitrile, methyl acrylate, ethyl acrylate, n-butyl acrylate, isobutyl acrylate, methyl methacrylate, ethyl methacrylate, n-butyl methacrylate, isobutyl methacrylate, 2-ethylhexyl methacrylate, maleic anhydride, methylmaleic anhydride, 1,2-dimethylmaleic anhydride, ethylmaleic anhydride, phenylmaleic anhydride, N-methylmaleimide, N-ethylmaleimide, N-cyclohexylmaleimide, N-laurylmaleimide, and N-cetylmaleimide. Among these, styrene, acrylonitrile, methacrylonitrile, methyl acrylate, maleic anhydride, and N-methylmaleimide are preferable from the viewpoint of easiness of the reaction and general versatility. These monofunctional monomers may be used singly or in combinations of two or more thereof.

The polyfunctional monomer is a monomer having a plurality of radically polymerizable functional groups as the functional group, and a monomer having a vinyl group is preferable. The number of the functional group in the polyfunctional monomer is preferably 2 or 3.

Specific examples of the polyfunctional monomer preferably include divinylbenzene, triallyl isocyanurate, triallyl cyanurate, diacetone diacrylamide, polyethylene glycol diacrylate, polyethylene glycol dimethacrylate, trimethylolpropane trimethacrylate, trimethylolpropane triacrylate, ethylene glycol dimethacrylate, triethylene glycol dimethacrylate, diethylene glycol dimethacrylate, diisopropenyl benzene, p-quinone dioxime, p,p'-dibenzoyl quinone dioxime, phenyl maleimide, allyl methacrylate, N,N'-m-phenylene bismaleimide, diallyl phthalate, tetraallyl oxyethane, and 1,2-polybutadiene, and divinylbenzene and triallylisocyanurate are more preferable. These polyfunctional monomers may be used singly or in combinations of two or more thereof.

<Hydrogenated product (C) of block copolymer>

A hydrogenated product (C) of a block copolymer (hereinafter sometimes referred to as a "component (C)" or a "hydrogenated product (C)") contained in the second composition of the thermoplastic elastomer composition of the present disclosure is a hydrogenated product of a block copolymer including at least one block mainly including a conjugated diene monomer unit and at least one block mainly including a vinyl aromatic monomer unit.

The component (C) according to the present disclosure includes a monomer unit derived from the conjugated diene monomer, at least a part of which is hydrogenated (hereinafter sometimes referred to as "hydrogenation").

Here the "vinyl aromatic monomer unit" means a constituent unit of a polymer resulting from polymerization of a vinyl aromatic compound as a monomer, and the structure is a molecule structure in which two carbon atoms in a substituted ethylene group derived from a substituted vinyl group are bonding sites. The "conjugated diene monomer unit" means a constituent unit of a polymer resulting from polymerization of conjugated diene as a monomer, and the structure is a molecule structure in which two carbon atoms in olefin derived from the conjugated diene monomer are bonding sites.

In the component (C) according to the present disclosure, the expression "mainly including" indicates that the copolymer block includes 50 mol% or more, preferably 60 mol% or more, and more preferably 65 mol% or more of the monomer unit derived from the conjugated diene monomer (or the vinyl aromatic monomer) in the copolymer block. For example, the block mainly including a conjugated diene monomer unit means that the block includes 50 mol% or more, preferably 60 mol% or more, and more preferably 65 mol% or more of the monomer unit derived from the conjugated diene monomer in the block.

The vinyl aromatic monomer in the component (C) according to the present disclosure is not particularly limited, and examples thereof include vinyl aromatic compounds such as styrene, α-methylstyrene, p-methylstyrene, divinylbenzene, 1,1-diphenylethylene, N,N-dimethyl-p-aminoethylstyrene, and N,N-diethyl-p-aminoethylstyrene. These may be used singly or in combinations of two or more thereof. Among these, styrene is preferable from the viewpoint of economy.

The conjugated diene monomer in the component (C) according to the present disclosure is a diolefin having a pair of conjugated double bonds, and examples thereof include 1,3-butadiene (butadiene), 2-methyl-1,3-butadiene (isoprene), 2,3-dimethyl-1,3-butadiene, 1,3-pentadiene, 2-methyl-1,3-pentadiene, and 1,3-hexadiene. Among these, butadiene and isoprene are preferable from the viewpoint of economy. These may be used singly or in combinations of two or more thereof.

Arrangement of each block in the component (C) according to the present disclosure is not particularly limited, and any suitable arrangement can be adopted as appropriate. For example, in the case where S denotes a polymer block composed of the vinyl aromatic monomer units, and B denotes a polymer block composed of the conjugated diene monomer units, at least a part of which is hydrogenated, examples of the hydrogenated product of the block copolymer include a linear block copolymer represented by SB, $S(BS)_{n1}$ (where n1 is an integer of 1 to 3), $S(BSB)_{n2}$ (where n2 is an integer of 1 to 2), and copolymer represented by $(SB)_{n3}X$ (where n3 is an integer of 3 to 6; and X denotes a residue of a coupling agent such as silicon tetrachloride, tin tetrachloride, and a polyepoxy compound). Among these, linear block copolymers of an SB 2-block type (diblock), an SBS 3-block type (triblock), and an SBSB 4-block type (tetrablock) are preferable.

Here, the polymer block B may be a polymer block consisting of conjugated diene monomer units alone or a polymer block mainly including a conjugated diene monomer unit and including a vinyl aromatic monomer unit (a copolymer of the conjugated diene monomer unit and the vinyl aromatic monomer unit), and at least a part of the conjugated diene monomer units in either polymer block is hydrogenated.

The content of the vinyl aromatic monomer unit in the component (C) according to the present disclosure is 10 to 80% by mass, and from the viewpoint of heat resistance and dispersibility, preferably 12 to 80% by mass, and more preferably 12 to 70% by mass. If the content of the vinyl aromatic monomer unit is 10% by mass or more, the mechanical physical properties can be further improved. If the content of the vinyl aromatic monomer unit is 80% by mass or less, low temperature properties can be further improved.

The content of the vinyl aromatic monomer unit in the component (C) according to the present disclosure can be measured by nuclear magnetic resonance spectrometry (NMR).

The content of the vinyl aromatic monomer unit block in the component (C) according to the present disclosure is preferably 10% by mass or more, and more preferably 10 to 40% by mass from the viewpoint of mechanical strength. Here, the content of the vinyl aromatic compound polymer block in the component (C) is defined by the following expression using the mass of the vinyl aromatic compound polymer block (where a vinyl aromatic compound polymer having an average polymerization degree of about 30 or less is excluded) obtained by a method of decomposing a copolymer before hydrogenation through oxidation using osmium tetroxide as a catalyst with tert-butyl hydroperoxide (the method described in I. M. Kolthoff, et al., J. Polym. Sci. 1, 429 (1946), and hereinafter, also referred to as an "osmium tetroxide decomposition method"):

Content of the vinyl aromatic compound polymer block (% by mass) = (mass of vinyl aromatic compound polymer block in copolymer before hydrogenation/mass of copolymer before hydrogenation) $\times$ 100

In the case where a plurality of polymer blocks is present in the component (C) according to the present disclosure, structural features such as the molecular weight and composition of the blocks may be the same or different from each other. For example, the hydrogenated copolymer block including the conjugated diene monomer unit and the vinyl aromatic monomer unit, and the hydrogenated copolymer block mainly including the conjugated diene monomer unit, may be present in the component (C). The boundary between the blocks and the end of the block may not always need to be clearly distinguished. The aspect of distribution of the vinyl aromatic monomer unit in the respective polymer blocks is not particularly limited and may be uniformly distributed or distributed in a tapered manner, in a step manner, in a projected manner, or in a depressed manner. Moreover, a crystalline portion may be present in the polymer block.

The aspect of the distribution of the vinyl unit of the conjugated diene monomer unit in the respective polymer block in the component (C) according to the present disclosure is not particularly limited, and for example, the distribution may be lopsided. Examples of a method for controlling distribution of the vinyl unit include a method of adding a vinylating agent during polymerization and a method of changing a polymerization temperature. The conjugated diene monomer unit may have lopsided distribution of the hydrogenation rate. The distribution of the hydrogenation rate can be controlled by a method of changing distribution of the vinyl unit or by a method of utilizing the difference in the hydrogenation speed between an isoprene unit and a butadiene unit when a copolymer obtained by copolymerizing isoprene and butadiene is hydrogenated using a hydrogenation catalyst described later.

In the component (C) according to the present disclosure, preferably 75 mol% or more, more preferably 85 mol% or more, and even more preferably 97 mol% or more, of unsaturated bonds included in the conjugated diene monomer unit before hydrogenation is hydrogenated, from the viewpoint of heat resistance, aging resistance, and weatherability.

The hydrogenation catalyst used for hydrogenation is not particularly limited, and conventionally known catalysts can be used:

(1) supported heterogeneous hydrogenation catalysts in which a metal such as Ni, Pt, Pd, and Ru is supported on, for example, carbon, silica, alumina, and diatomaceous earth;
(2) so-called Ziegler-type hydrogenation catalysts using an transition metal salt, such as an organic acid salt and an acetylacetone salt of, for example, Ni, Co, Fe, and Cr, and a reducing agent, such as organic aluminum; and

(3) homogeneous hydrogenation catalysts such as organic metal complexes of organic metal compounds of, for example, Ti, Ru, Rh, and Zr.

Specific examples of the hydrogenation catalyst include hydrogenation catalysts described in Japanese Patent Examined Publication Nos. S42(1967)-008704, S43(1968)-006636, S63(1988)-004841, H01(1989)-037970, H01(1989)-053851, and H02(1990)-009041. Among these, examples of preferred hydrogenation catalysts include reducing organic metal compounds such as a titanocene compound.

As the titanocene compound, compounds described in JPH08-109219A can be used, for example. Specific examples thereof include compounds having at least one or more ligand having a (substituted) cyclopentadienyl skeleton such as biscyclopentadienyltitanium dichloride and monopentamethylcyclopentadienyltitanium trichloride, an indenyl skeleton, or a fluorenyl skeleton.

Examples of the reducing organic metal compound include an organic alkali metal compound of, for example, organic lithium, an organic magnesium compound, an organic aluminum compound, an organic boron compound, and an organic zinc compound.

A method of polymerizing a block copolymer before hydrogenation in the component (C) according to the present disclosure is not particularly limited, and a known method can also be used. Examples thereof include methods described in Japanese Patent Examined Publication Nos. S36(1961)-019286, S43(1968)-017979, S46(1971)-032415, S49(1974)-036957, S48(1973)-002423, S48(1973)-004106 and S56(1981)-028925, and Japanese Patent Publication Nos. S59(1984)-166518A and S60(1985)-186577A.

If necessary, the component (C) may have a polar group. Examples of the polar group include a hydroxy group, a carboxyl group, a carbonyl group, a thiocarbonyl group, an acid halide group, an acid anhydride group, a thiocarboxylic acid group, an aldehyde group, a thioaldehyde group, a carboxylic acid ester group, an amide group, a sulfonic acid group, a sulfonic acid ester group, a phosphorus acid group, a phosphorus acid ester group, an amino group, an imino group, a nitrile group, a pyridyl group, a quinoline group, an epoxy group, a thioepoxy group, a sulfide group, an isocyanate group, an isothiocyanate group, a halogenated silicon group, an alkoxysilicon group, a halogenated tin group, a boronic acid group, a boron containing group, a boronic acid salt group, an alkoxytin group, and a phenyltin group.

In the block copolymer before hydrogenation in the component (C) according to the present disclosure, the vinyl bond content in the conjugated diene monomer unit is preferably 5 mol% or more from the viewpoint of flexibility and scratch resistance, and preferably 90 mol% or less from the viewpoint of productivity, elongation at break, and scratch resistance. The vinyl bond content in the conjugated diene monomer unit is more preferably 10 to 90 mol%, and even more preferably 10 to 80 mol%. As used herein, the vinyl bond content means the proportion of the conjugated diene before hydrogenation integrated in the bonding modes of 1,2-bond and 3,4-bond among the one integrated in the bonding modes of 1,2-bond, 3,4-bond, and 1,4-bond. The vinyl bond content can be measured by NMR.

The weight-average molecular weight of the component (C) before crosslinking is not particularly limited, and is preferably 50,000 or more from the viewpoint of scratch resistance, preferably 400,000 or less, and more preferably 50,000 to 300,000 from the viewpoint of forming flowability. The molecular weight distribution (Mw/Mn: weight-average molecular weight /number-average molecular weight) is not particularly limited, and is preferably a value close to 1 from the viewpoint of scratch resistance. The weight-average molecular weight and the number-average molecular weight can be determined using tetrahydrofuran (1.0 mL/min) as a solvent under the condition of an oven temperature of 40°C by gel permeation chromatography (GPC; manufactured by SHIMADZU Corporation, apparatus name "LC-10") and a column of TSKgelGMHXL (4.6 mm ID $\times$ 30 cm, two columns). The weight-average molecular weight (Mw), number-average molecular weight (Mn), and the molecular weight distribution (Mw/Mn) are calculated as a molecular weight in terms of polystyrene.

The component (C) according to the present disclosure is not particularly limited, and the conjugated diene monomer and the vinyl aromatic monomer can be used. Among these, from the viewpoint of the balance between mechanical strength and impact resistance, examples of a preferred combination thereof include a block including a butadiene unit and a styrene unit and a block including an isoprene unit and a styrene unit.

The component (C) according to the present disclosure may mainly include at least a conjugated diene monomer unit, and the content of each monomer is not particularly limited. In particular, from the viewpoint of the balance between mechanical strength and impact resistance, the content of the vinyl aromatic monomer unit in the copolymer block is preferably 10% by mass or more and less than 80% by mass, and more preferably 10% by mass or more and less than 70% by mass.

As commercially available products of the component (C) according to the present disclosure, for example, S.O.E. S1605 and S1606 manufactured by Asahi Kasei Corporation, and TUFTEC H1041 and H1221 manufactured by Asahi Kasei Corporation (all of which are registered trademarks) can be used.

<Softener (D)>

A softener (D) (hereinafter sometimes referred to as a "component (D)"), one of the components that may be contained in the thermoplastic elastomer composition, the first composition, and/or the second composition of the present disclosure, is not particularly limited, but a plasticizer usually used for rubber can be used. From the viewpoint of compatibility with, for example, the propylene polymer (A) and the ethylene/$\alpha$-olefin copolymer (B), process oils composed of, for example, paraffinic hydrocarbon, naphthenic hydrocarbon, and aromatic hydrocarbon are preferable. Among these components (D), paraffinic hydrocarbon-based process oils are preferable from the viewpoint of weatherability and coloring properties, and naphthenic hydrocarbon-based process oils are preferable from the viewpoint of compatibility. From the viewpoint of thermal stability and photostability, the content of the aromatic hydrocarbon in the process oil is preferably 10% or less, more preferably 5% or less, and even more preferably 1% or less in a ratio of carbon atoms specified by ASTM D2140-97.

<Polyorganosiloxane (E)>

The structure of a polyorganosiloxane (E) (hereinafter sometimes referred to as a component (E)"), one of the components that may be contained in the thermoplastic elastomer composition, the first composition, and/or the second composition of the present disclosure, is not particularly limited, and is preferably a linear, branched, or crosslinking polymer structure from the viewpoint of wear resistance and feeling by touch.

The component (E) according to the present disclosure is not particularly limited, and a known component can also be used. Preferred polyorganosiloxane is a polymer including a siloxane unit having a substituent such as an alkyl group, a vinyl group, and an aryl group. Among these, particularly, polyorganosiloxane having an alkyl group is preferable, and polyorganosiloxane having a methyl group is more preferable.

Specific examples of the polyorganosiloxane having a methyl group include polydimethylsiloxane, polymethylphenylsiloxane, and polymethylhydrogensiloxane. Among these, polydimethylsiloxane is preferable.

The kinematic viscosity of the component (E) according to the present disclosure is not particularly limited. From the viewpoint of wear resistance and scratch resistance, the kinematic viscosity (25°C) specified in JIS Z8803 is preferably 5,000 centi stokes (cSt) or more. The kinematic viscosity of the component (E) is preferably less than 3,000,000 cSt because dispersibility of the component (E) in the resulting thermoplastic elastomer composition tends to be improved, the appearance is good, and stability in quality during melt extrusion tends to be further improved. The kinematic viscosity of the component (E) is more preferably 10,000 cSt or more and less than 3,000,000 cSt, and even more preferably 50,000 cSt or more and less than 3,000,000 cSt.

<Thermoplastic elastomer composition>

The thermoplastic elastomer composition of the present disclosure is a thermoplastic elastomer composition including first and second compositions described below, wherein

a content of the component (B) contained in the thermoplastic elastomer composition is 10 to 180 parts by mass based on 100 parts by mass of the component (A);
a content of the component (C) contained in the thermoplastic elastomer composition is 170 to 500 parts by mass based on 100 parts by mass of the component (A); and
a ratio (Wi/Wo) is 0.01 to 0.70, where Wo (% by mass) denotes the sum of a content rate of the component (B) and a content rate of the component (C) in the thermoplastic elastomer composition, and $W_1$ (% by mass) denotes a gel content in the thermoplastic elastomer composition. The value of $W_1/W_0$ is preferably 0.10 to 0.60, and is more preferably 0.20 to 0.50.

The value of $W_1/W_0$ can be adjusted by changing the compositions of the first composition and the second composition contained in the thermoplastic elastomer composition of the present disclosure, and in particular, greatly varies depending on the content of the component (C) in the first composition and the content of the component (F) in the second composition. The details will be described later.

The Shore A hardness (value at 10 seconds) (in accordance with the measurement method of JIS K 6253) of the thermoplastic elastomer composition of the present disclosure is preferably 40 to 90, more preferably 50 to 85, and even more preferably 60 to 85.

When the Shore A hardness (value at 10 seconds) of the thermoplastic elastomer composition of the present disclosure is in the above range, a molded body with design properties, such as tactile sensation and high-class appearance, and scratch resistance can be easily formed.

Specifically, the Shore A hardness (value at 10 seconds) can be measured by a method described in Examples below.

The melt flow rate (in accordance with the measurement method of JIS K 7210, 230°C, 2.16 kg load) of the thermoplastic elastomer composition of the present disclosure is preferably 0.5 to 300 g/10 min, more preferably 1 to 200 g/10 min, and even more preferably 2 to 200 g/10 min, from the viewpoint of, for example, obtaining a composition with excellent formability.

The content of the component (B) contained in the thermoplastic elastomer composition of the present disclosure is 10 to 180 parts by mass, preferably 20 to 175 parts by mass, more preferably 50 to 170 parts by mass, and even more preferably 80 to 170 parts by mass based on 100 parts by mass of the component (A).

When the content of the component (B) is less than 10 parts by mass based on 100 parts by mass of the component (A), a preferable appearance (gloss) cannot be obtained. When the content exceeds 180 parts by mass, sufficient fluidity cannot be obtained.

The content of the component (C) contained in the thermoplastic elastomer composition of the present disclosure is 170 to 500 parts by mass, preferably 175 to 400 parts by mass, and more preferably 180 to 250 parts by mass based on 100 parts by mass of the component (A).

When the content of the component (C) is less than 170 parts by mass based on 100 parts by mass of the component (A), the thermoplastic elastomer may not have preferable scratch resistance. On the other hand, when the content exceeds 500 parts by mass, a thermoplastic elastomer having a preferable appearance (gloss) and sufficient heat resistance may not be obtained.

<<First Composition>>

The first composition contained in the thermoplastic elastomer composition of the present disclosure is a composition containing the olefin-based resin (A), the ethylene/$\alpha$-olefin copolymer (B), and the crosslinking agent (F). The first composition may contain the component (D) and the component (E) as well as other additives described below within a range that does not interfere with the effects of the present disclosure.

The content of the component (F) contained in the first composition according to the present disclosure is preferably 0.2 to 3.0 parts by mass, more preferably 0.3 to 2.0 parts by mass, and even more preferably 0.4 to 1.5 parts by mass based on 100 parts by mass of the component (A).

The first composition according to the present disclosure may contain a crosslinking aid (G), if necessary. A known crosslinking aid can be used without restriction, and for example, divinylbenzene can be used. The content of the crosslinking aid (G) is preferably 0.5 to 10.0 parts by mass, and more preferably 1.0 to 5.0 parts by mass based on 100 parts by mass of the component (A).

The first composition according to the present disclosure may contain the component (C) in such a content that the value of Wi/Wo is 0.70 or less, and is preferably substantially free of the component (C), and more preferably contains no component (C). When the content of the component (C) in the first composition increases, the value of $W_1/W_0$ tends to be large, and when the value of Wi/Wo exceeds 0.70, the desired scratch resistance cannot be obtained.

<<Second Composition>>

The second composition contained in the thermoplastic elastomer composition of the present disclosure is a composition containing the component (C).

The content of the component (C) contained in the second composition is 30 parts by mass or more, preferably 80 parts by mass or more, and even more preferably 100 parts by mass or more based on 100 parts by mass of the olefin-based resin (A) contained in the thermoplastic elastomer composition.

The upper limit is not particularly limited as long as the content does not exceed 500 parts by mass based on 100 parts by mass of the olefin-based resin (A) contained in the thermoplastic elastomer composition.

The second composition according to the present disclosure may contain the component (F) in a range of 0 to 5 parts by mass based on 100 parts by mass of the component (C). Here, the content of the component (F) being in the range of 0 to 5 parts by mass means that the component (F) may or may not be contained, but even if it is contained, the content is 5 parts by mass or less.

The second composition is preferably substantially free of the component (F), and more preferably contains no component (F). When the content of the component (F) in the second composition exceeds 5 parts by mass, the value of $W_1/W_0$ tends to be large, and the thermoplastic elastomer obtained when the value of $W_1/W_0$ exceeds 0.70 does not have the desired scratch resistance.

When the thermoplastic elastomer composition of the present disclosure contains the component (D) and the component (E) in addition to, for example, the component (A), the content of the component (D) is 0 to 300 parts by mass, preferably 10 to 250 parts by mass, and more preferably 20 to 200 parts by mass based on 100 parts by mass of the component (A) from the viewpoint of formability and heat resistance, and the content of the component (E) is 2 to 40 parts by mass, more preferably 4 to 35 parts by mass, and even more preferably 5 to 30 parts by mass.

When the content of the component (E) is 2 parts by mass or more, the effect of improving scratch resistance of the resulting thermoplastic elastomer composition is sufficiently exhibited, and when the content is 40 parts by mass or less, the dispersibility in the thermoplastic elastomer composition is excellent.

The component (D) and the component (E) according to the present disclosure may be contained in the first composition, may be contained in the second composition, or may be a third component, as long as they are contained in the thermoplastic elastomer composition of the present disclosure.

The second composition may contain the component (A), the component (B), and the component (G) as well as other additives described below within a range that does not interfere with the effects of the present disclosure.

The thermoplastic elastomer composition according to the present disclosure can further contain an inorganic filler, a plasticizer, and other additives, in addition to, for example, the component (A).

The inorganic filler, the plasticizer, and other additives may be contained in the first composition, may be contained in the second composition, or may be a third component, as long as they are contained in the thermoplastic elastomer composition of the present disclosure.

Examples of the inorganic filler include calcium carbonate, magnesium carbonate, silica, carbon black, glass fiber, titanium oxide, clay, mica, talc, magnesium hydroxide, and aluminum hydroxide.

Examples of the plasticizer include polyethylene glycol and phthalic acid ester such as dioctyl phthalate (DOP).

Examples of the other additives include organic and inorganic pigments such as carbon black, titanium dioxide, and phthalocyanine black; heat stabilizers such as 2,6-di-t-butyl-4-methylphenol and n-octadecyl-3-(3,5'-di-t-butyl-4-hydroxyphenyl)propionate; antioxidants such as tris(nonylphenyl)phosphite and distearyl pentaerythritol diphosphite; ultraviolet absorbers such as 2-(2'-hydroxy-5'-methylphenyl)benzotriazole and 2,4-dihydroxybenzophenone; light stabilizers such as bis-[2,2,6,6-tetramethyl-4-piperidinyl] sebacate, tetrakis(2,2,6,6-tetramethyl-4-piperidinyl) -1,2,3,4-butanetetracarboxylate; flame retardants such as ammonium polyphosphate, trioctyl phosphate, and magnesium hydroxide; silicone oils such as dimethylsilicone oil and methylphenylsilicone oil; antiblocking agents such as stearamide and erucamide; foaming agents such as sodium bicarbonate and N,N'-dinitrosopentamethylenetetramine; antistatic agents such as palmitic acid monoglyceride and stearic acid monoglyceride; and antibacterial agents such as silver ion carrying zeolite and thiosulfite silver complexes.

The thermoplastic elastomer composition of the present disclosure may also contain raw materials derived from biomass.

<Method for producing thermoplastic elastomer>

The method for producing a thermoplastic elastomer of the present disclosure may include steps as follows. Specifically, the method for producing a thermoplastic elastomer may include:

(i) a step of dynamically crosslinking an olefin-based resin (A) and an ethylene/$\alpha$-olefin copolymer (B) with a crosslinking agent (F), followed by addition of a hydrogenated product (C) at a subsequent stage of the same extruder, if necessary, further adding another component for melt-kneading, and then taking out the composition of the present disclosure from the extruder; or

(ii) a step of dynamically crosslinking an olefin-based resin (A) and an ethylene/$\alpha$-olefin copolymer (B) with a crosslinking agent (F), taking out a crosslinked product from an extruder after completion of a crosslinking reaction, and melting the crosslinked product and a hydrogenated product (C) again, followed by extrusion to obtain the composition of the present disclosure.

The content of an ethylene/$\alpha$-olefin copolymer (B) contained in the resulting thermoplastic elastomer composition is 10 to 180 parts by mass based on 100 parts by mass of an olefin-based resin (A).

The content of the hydrogenated product (C) contained in the resulting thermoplastic elastomer composition is 170 to 500 parts by mass based on 100 parts by mass of the olefin-based resin (A).

In the dynamic crosslinking reaction, the crosslinking agent (F) may be added together with the olefin-based resin (A) and the ethylene/$\alpha$-olefin copolymer (B) from the beginning or may be added in the course of the extruder. The softener (D) may be added in the course of the extruder or may be added separately at the beginning and in the course of the extruder. A part of the olefin-based resin (A) and the ethylene/$\alpha$-olefin copolymer (B) may be added in the course of the extruder.

Here, the degree of crosslinking is controlled by the crosslinking initiator, the type of crosslinking aid, the addition amount, the reaction temperature, and the reaction method.

In the production method according to the present disclosure, a general apparatus such as a Banbury mixer, a kneader, a single-screw extruder, and a twin-screw extruder, which are used in the production of a conventional resin composition and a rubber composition, can be employed. In particular, a twin-screw extruder is preferably used to achieve efficient dynamic crosslinking. The twin-screw extruder is more suitable for continuously producing the composition of the present disclosure by uniformly and finely dispersing the olefin-based resin (A) and the ethylene/$\alpha$-olefin copolymer (B) and further adding other components to cause a crosslinking reaction.

<First step>

The first step is a step of melt-kneading the component (A), the component (B), and the component (F), and as optional components, the component (G), the component (C), the component (D), the component (E), and/or other additives, in the respective predetermined blending amounts described above to produce a first composition.

The melt-kneading in the first step is preferably performed in a non-open apparatus and in an inert gas atmosphere such as nitrogen or carbon dioxide. The temperature of the melt-kneading ranges from the melting point of the component (A) to 300°C, and is usually 150 to 270°C, and preferably 160 to 250°C. The kneading time is usually 1 to 20 minutes, and preferably 1 to 10 minutes. The shear force to be applied, in terms of the shear velocity, is usually in the range of 10 to 50,000 s$^{-1}$, and preferably of 100 to 10,000 s$^{-1}$.

<Second step>

The second step is a method of melt-kneading the first composition obtained in the first step with a second composition obtained by mixing the component (C) and, as optional components, the component (A), the component (B), the component (D), the component (E), the component (F), the component (G) and/or other additives in the predetermined blending amounts described above to produce a thermoplastic elastomer.

Components other than the above components that can be contained in the thermoplastic elastomer of the present disclosure, such as the component (D) and the component (E), may be blended in the second step or the first step.

Another aspect of the method for producing a thermoplastic elastomer of the present disclosure is a production method including steps of: producing a first composition in the first step; mixing the component (C) in the predetermined blending amount described above or by melt-kneading after mixing to produce a second composition in a step different from the second step; and then melt-kneading the first composition produced in the first step and the second composition produced in the second step.

The melt-kneading in the second step may be performed under the same conditions as those in the first step.

Components other than the above components that can be contained in the thermoplastic elastomer of the present disclosure, such as the component (D) and the component (E), may be blended in the third step, the second step, or the first step.

<<Molded body>>

The molded body according to the present disclosure is not particularly limited as long as it includes the thermoplastic elastomer composition of the present disclosure, and is molded using any known molding method depending on the application. Examples of such methods include press molding, injection molding, extrusion, calendering, blow molding, vacuum forming, and compression molding. From the viewpoint of productivity and easy formation of a complicated shape, the molded body is preferably an injection molded body molded by an injection molding method.

The thermoplastic elastomer composition of the present disclosure has low hardness and is flexible with excellent scratch resistance and is not particularly limited in application. As a molded body, for example, the thermoplastic elastomer composition is suitable for various known applications such as automobile parts, civil engineering and building materials, electrical and electronic parts, sanitary goods, films or sheets, foams, and artificial leather. In particular, the thermoplastic elastomer composition can be suitably used for automobile parts such as automobile interior parts and surface materials such as artificial leather.

<Automobile part>

Examples of the automobile parts for which the molded body according to the present disclosure may be used include weather strips, ceiling materials, interior sheets, bumper moldings, side moldings, air spoilers, air duct hoses, cup holders, side brake grips, shift knob covers, seat adjustment knobs, flapper door seals, wire harness grommets, rack-and-pinion boots, suspension cover boots, glass guides, inner belt line seals, roof guides, trunk lid seals, molded quarter window gaskets, corner moldings, glass encapsulations, hood seals, glass run channels, secondary seals, various packings, bumper parts, body panels, side shields, glass run channels, instrument panel skins, door skins, ceiling skins, weather stripping materials, hoses, steering wheels, boots, wire harness covers, and seat adjuster covers. Among them, the thermoplastic elastomer composition of the present disclosure is particularly preferable because it can improve the texture and tactile sensation.

<Civil engineering and building material>

Examples of the civil engineering and building material for which the molded body according to the present disclosure can be used include civil engineering materials and building materials such as soil improvement sheets, water supply plates, and noise prevention walls, various civil engineering and building gaskets and sheets, water sealing materials, joint materials, and building window frames. Among them, the thermoplastic elastomer composition of the present disclosure is particularly preferable because it can improve the texture and tactile sensation.

<Electrical and electronic part>

Examples of the electrical and electronic components for which the molded body according to the present disclosure may be used include electrical and electronic components such as an electric wire covering material, a connector, a cap, and a plug. Among them, the thermoplastic elastomer composition of the present disclosure is particularly preferable because it can improve the texture and tactile sensation.

<Daily necessity>

Examples of daily necessities for which the molded body according to the present disclosure can be used include sporting goods such as sports shoe soles, ski boots, tennis rackets, bindings for ski plates, bat grips, and miscellaneous goods such as pen grips, toothbrush grips, hairbrushes, fashion belts, various caps, and shoe inner soles. Among them, the thermoplastic elastomer composition of the present disclosure is particularly preferable because it can improve the texture and tactile sensation.

<Film or sheet>

Examples of the film or sheet for which the molded body according to the present disclosure can be used include infusion bags, medical containers, automobile interior and exterior materials, beverage bottles, clothing cases, food packaging materials, food containers, retort containers, pipes, transparent substrates, and sealants, and among them, the thermoplastic elastomer composition of the present disclosure is particularly preferable because it can improve the texture and tactile sensation.

<Artificial leather>

Examples of the artificial leather for which the molded body according to the present disclosure can be used include chair skins, bags, school bags, sports shoes such as track and field shoes, marathon shoes, and running shoes, wears such as jumpers and coats, belts, pleated belts, ribbons, notebook covers, book covers, key holders, pen cases, wallets, business card holders, and commuter pass holders. Among them, the thermoplastic elastomer composition of the present disclosure is particularly preferable because it can improve the texture and tactile sensation of the leather.

Examples

Hereinafter, the present disclosure will be described in greater detail by way of Examples, but the present disclosure is in no way limited by these Examples.
In Examples and Comparative Examples, the following polymers were used.

[Olefin-based resin (A)]

The olefin-based resin (A) used was a propylene homopolymer (homo PP) (trade name: SunAllomer (registered trademark) PL400A, manufactured by SunAllomer Ltd.) (A-1) with a melt flow rate (MFR) of 2.0 g/10 min under conditions of 230°C and a load of 2.16 kg.

[Ethylene/$\alpha$-olefin copolymer (B)]

The ethylene/$\alpha$-olefin copolymer (B) used was an ethylene/1-octene copolymer (manufactured by The Dow Chemical Company, trade name "ENGAGE 8842") (B-1). The content of ethylene in the copolymer was 55% by mass, the content of octene was 45% by mass, and MFR measured under conditions of a temperature of 190°C and a load of 2.16 kg was 1.0 g/10 min.

[Component (C)]

The component (C) used was a hydrogenated product of styrenic block copolymer described below.

(C-1) Hydrogenated styrene-butadiene block copolymer (S.O.E. S1606 (registered trademark) manufactured by Asahi Kasei Corporation)
(C-2) Hydrogenated styrene-butadiene block copolymer (S.O.E. S1605 (registered trademark) manufactured by Asahi Kasei Corporation)
(C-3) Hydrogenated styrene-butadiene block copolymer (TUFTEC H1041 (registered trademark) manufactured by Asahi Kasei Corporation)
(C-4) Hydrogenated styrene-butadiene block copolymer (TUFTEC H1221 (registered trademark) manufactured by Asahi Kasei Corporation)

[Softener (D)]

The softener (D) used was a paraffinic oil (manufactured by Idemitsu Kosan Co., Ltd., trade name "Diana Process Oil PW-100") (D-1).

[Polyorganosiloxane (E)]

The polyorganosiloxane (E) used was a master batch composed of 50% by mass of dimethylsiloxane and 50% by mass of polypropylene (trade name "MB50 - 001", manufactured by DuPont Toray Specialty Materials, K.K.) (E-1).

[Crosslinking agent (F)]

The crosslinking agent (F) used was an organic peroxide of 2,5-dimethyl-2,5-bis(t-butylperoxy)hexane (manufactured by NOF Corporation, trade name "PERHEXA 25B") (F-1).

[Crosslinking aid (G)]

The crosslinking aid (G) used was divinylbenzene (manufactured by Wako Pure Chemical Industries, Ltd.; hereinafter, referred to as "DVB") (G-1).

[Example 1]

<Method for producing thermoplastic elastomer composition>

An extruder used was a twin-screw extruder having an oil inlet port in a central portion of a barrel (30 mm$\varphi$, L/D = 74; manufactured by KOBE STEEL, LTD., "KTX-30"). The screw was a double start screw having a kneading portion before and after an inlet port.
The thermoplastic elastomer composition was obtained by melt extrusion twice in total (hereinafter, the first melt extrusion is referred to as "1 Pass" and the second melt extrusion as "2 Pass").

(1) 1 Pass

The components (A-1), (B-1), (F-1), and (G-1) described in Table 1 were each mixed in batch in the blending amounts (parts by mass) shown in Table 1, and then introduced into a twin-screw extruder (cylinder temperature: 200°C) with a constant volume feeder, followed by melt extrusion to obtain a first composition.

(2) 2 Pass

The components (C-1) and (E-1) were mixed in batch in the blending amounts (parts by mass) shown in Table 1 to make a second composition, and then the first composition obtained in the 1 Pass above was mixed and introduced into the same twin-screw extruder (cylinder temperature: 200°C) with a constant volume feeder, followed by injection of the component (D-1) in the amounts shown in Table 1 from the inlet in the center of the twin-screw extruder by pump to produce a thermoplastic elastomer composition through melt extrusion.

<Production of injection molded body>

The thermoplastic elastomer composition obtained in the step was injection-molded with an injection molding machine ("M150CL-DM", manufactured by The Japan Steel Works Meiki Plant (formerly Meiki Co., Ltd.)) under the molding conditions of a resin temperature of 220°C and a mold temperature of 40°C using a flat metal mold to prepare injection molded samples. The flat metal mold had a size of 15 cm (length) × 9 cm (width) and had been subjected to a leather texture embossing.

The physical properties of the obtained thermoplastic elastomer composition and injection molded body were evaluated by the following methods. Table 1 shows the results.

(1) MFR (g/10 min)

The melt flow rate of the thermoplastic elastomer composition obtained above was measured in accordance with JIS K7120 under conditions of 230°C and a load of 2.16 kg.

(2) Measurement of Shore A hardness

A pressed sheet with a thickness of 2 mm was prepared from the thermoplastic elastomer composition, and a laminated sheet with a thickness of 6 mm obtained by stacking three of these pressed sheets was used as a measurement sample.

The measurement sample above was measured with a Shore A hardness tester in accordance with JIS K6253. The value read 10 seconds after the pressure plate was brought into contact with the test sample was used as the Shore A hardness (value at 10 seconds).

(3) Measurement of gel content

The mass ($W_2$) of the thermoplastic elastomer composition was measured, added to 20 mL of ODCB, and dissolved by heating at 145°C for 2 hours. Hot filtration was performed using a membrane filter, the residue on the filter was dried to measure the mass ($W_3$) of the residue after drying. The gel content $W_1$ was calculated by the following equation.

$$\text{Gel content } W_1 \text{ (\% by mass)} = (W_3/W_2) \times 100$$

(4) Scratch resistance

Ten scratches were made on the embossed surface of the injection molded body in each of the vertical and horizontal directions using a pencil-type scratch hardness tester (manufactured by Erichsen, 318/318S No. 2) under a load of 10 N. The evaluation was made by visually observing the scratches in the central lattice area. The evaluation was based on the following criteria:

5: Almost no change in appearance observed due to scratches.
4: Slight change in appearance observed due to scratches.
3: Change in appearance observed due to scratches.
2: Considerable change in appearance observed due to scratches.
1: Significant change in appearance observed due to scratches.

(5) Evaluation of appearance (gloss)

The embossed surface of the injection molded body was visually observed to evaluate the gloss. The evaluation was based on the following criteria:

O: Low gloss and excellent appearance.
X: High gloss and poor appearance.

[Examples 2 to 5 and Comparative Examples 1 to 4]

A thermoplastic elastomer composition and an injection-molded body were prepared in the same manner as in Example 1, except for changing respective components and the amounts thereof blended to those shown in Table 1.

The physical properties of the obtained thermoplastic elastomer composition and injection molded body were evaluated by the above methods. Table 1 shows the results.

[Table 1]

Table 1

| | | | | Example 1 | Example 2 | Example 3 | Example 4 | Example 5 |
|---|---|---|---|---|---|---|---|---|
| Composition | First composition | Component (A-1) | | parts by mass | 100 | 100 | 100 | 100 | 100 |
| | | Component (B-1) | | parts by mass | 150 | 150 | 110 | 110 | 110 |
| | | Component (C) | C-1 | parts by mass | | | | | |
| | | | C-2 | parts by mass | | | | | |
| | | Component (F-1) | | parts by mass | 1 | 1 | 1 | 1 | 1 |
| | | Component (G-1) | | parts by mass | 3 | 3 | 3 | 3 | 3 |
| | Second composition | Component (C) | C-1 | parts by mass | 250 | | 197 | | |
| | | | C-2 | parts by mass | | 250 | | | |
| | | | C-3 | parts by mass | | | | 197 | |
| | | | C-4 | parts by mass | | | | | 197 |
| | | Component (D-1) | | parts by mass | | | 113 | 113 | 113 |
| | | Component (E-1) | | parts by mass | 22 | 22 | 23 | 23 | 22 |
| | | $W_0$ | | % by mass | 76 | 76 | 56 | 56 | 56 |
| Evaluation | | Shore A hardness | | | 78 | 82 | 71 | 73 | 76 |
| | | MFR | | g/10 min | 4 | 7 | 61 | 52 | 52 |
| | | Gel content ($W_1$) | | % by mass | 29 | 32 | 15 | 17 | 19 |
| | | $W_1/W_0$ | | | 0.38 | 0.42 | 0.27 | 0.30 | 0.34 |
| | | Scratch resistance | | | 5 | 4 | 4 | 4 | 4 |
| | | Appearance (gloss) | | | ○ | ○ | ○ | ○ | ○ |

17

EP 4 495 183 A1

(continued)

| Composition | | | | | Comparative Example 1 | Comparative Example 2 | Comparative Example 3 | Comparative Example 4 |
|---|---|---|---|---|---|---|---|---|
| Composition | First composition | | Component (A-1) | parts by mass | 100 | 100 | 100 | 100 |
| | | | Component (B-1) | parts by mass | 150 | 150 | 110 | |
| | | Component (C) | C-1 | parts by mass | 250 | | 197 | |
| | | | C-2 | parts by mass | | 250 | | |
| | | | Component (F-1) | parts by mass | 1 | 1 | 1 | |
| | | | Component (G-1) | parts by mass | 6 | 6 | 5 | |
| | Second composition | Component (C) | C-1 | parts by mass | | | | 400 |
| | | | C-2 | parts by mass | | | | |
| | | | C-3 | parts by mass | | | | |
| | | | C-4 | parts by mass | | | | |
| | | | Component (D-1) | parts by mass | | | 113 | |
| | | | Component (E-1) | parts by mass | 22 | 22 | 23 | 22 |
| | | | $W_0$ | % by mass | 76 | 76 | 56 | 77 |
| Evaluation | | | Shore A hardness | | 83 | 77 | 69 | 72 |
| | | | MFR | g/10 min | 0.5 | 1 | 11 | 4 |
| | | | Gel content ($W_1$) | % by mass | 55 | | 50 | 0 |
| | | | $W_1/W_0$ | | 0.73 | | 0.89 | 0.00 |
| | | | Scratch resistance | | 2 | 3 | 3 | 5 |
| | | | Appearance (gloss) | | ○ | ○ | ○ | × |

Note, "-" in the gel content $W_1$ and $W_1/W_0$ of Comparative Example 2 indicates that they are not measured.

<Evaluation result>

As shown in Table 1, it can be understood that injection molded bodies obtained from the thermoplastic elastomer compositions of Examples 1 to 5 are excellent in both scratch resistance and appearance.

In contrast, the injection molded bodies obtained from the thermoplastic elastomer compositions of Comparative Examples 1, 2, and 3 were not molded bodies having good scratch resistance. The injection molded body obtained from the thermoplastic elastomer composition of Comparative Example 4 was not a molded body having an excellent appearance.

**Claims**

1. A thermoplastic elastomer composition comprising a first composition and a second composition, wherein

   a content of an ethylene/$\alpha$-olefin copolymer (B) contained in the thermoplastic elastomer composition is 10 to 180 parts by mass based on 100 parts by mass of an olefin-based resin (A);
   a content of a hydrogenated product (C) of a block copolymer having at least one block mainly including a conjugated diene monomer unit and at least one block mainly including a vinyl aromatic monomer unit contained in the thermoplastic elastomer composition is 170 to 500 parts by mass based on 100 parts by mass of the olefin-based resin (A); and
   a ratio $W_1/W_0$ is 0.01 to 0.70, where $W_0$ (% by mass) denotes a sum of a content rate of the ethylene/$\alpha$-olefin copolymer (B) and a content rate of the hydrogenated product (C) in the thermoplastic elastomer composition, and $W_1$ (% by mass) denotes a gel content in the thermoplastic elastomer composition:

   [First Composition]
   a composition comprising the olefin-based resin (A), the ethylene/$\alpha$-olefin copolymer (B), and a crosslinking agent (F), and
   [Second Composition]
   a composition comprising the hydrogenated product (C) of a block copolymer having at least one block mainly including a conjugated diene monomer unit and at least one block mainly including a vinyl aromatic monomer unit, wherein the content of the hydrogenated product (C) contained in the second composition is 30 parts by mass or more based on 100 parts by mass of the olefin-based resin (A) contained in the thermoplastic elastomer composition.

2. The thermoplastic elastomer composition according to claim 1, wherein the hydrogenated product (C) is a styrenic block copolymer.

3. The thermoplastic elastomer composition according to claim 1 or 2, wherein the content of the hydrogenated product (C) contained in the thermoplastic elastomer composition is 180 to 250 parts by mass based on 100 parts by mass of the olefin-based resin (A).

4. The thermoplastic elastomer composition according to any one of claims 1 to 3, wherein

   the first composition is obtained by melt-kneading the olefin-based resin (A), the ethylene/$\alpha$-olefin copolymer (B), and the crosslinking agent (F), and
   the thermoplastic elastomer composition is obtained by melt-kneading the first composition and the second composition.

5. A method for producing a thermoplastic elastomer composition, comprising (i) or (ii):

   (i) a step of dynamically crosslinking an olefin-based resin (A) and an ethylene/$\alpha$-olefin copolymer (B) with a crosslinking agent (F), followed by addition of a hydrogenated product (C) at a subsequent stage of the same extruder for melt-kneading, and then taking out the thermoplastic elastomer composition from the extruder; or
   (ii) a step of dynamically crosslinking an olefin-based resin (A) and an ethylene/$\alpha$-olefin copolymer (B) with a crosslinking agent (F), taking out a crosslinked product from an extruder after completion of a crosslinking reaction, and melting the crosslinked product and a hydrogenated product (C) again, followed by extrusion to obtain a thermoplastic elastomer composition, wherein
   a content of the ethylene/$\alpha$-olefin copolymer (B) contained in the thermoplastic elastomer composition is 10 to 180 parts by mass based on 100 parts by mass of the olefin-based resin (A);

a content of the hydrogenated product (C) contained in the thermoplastic elastomer composition is 170 to 500 parts by mass based on 100 parts by mass of the olefin-based resin (A); and

a ratio $W_1/W_0$ is 0.01 to 0.70, where $W_0$ (% by mass) denotes a sum of a content rate of the ethylene/$\alpha$-olefin copolymer (B) and a content rate of the hydrogenated product (C) in the thermoplastic elastomer composition, and $W_1$ (% by mass) denotes a gel content in the thermoplastic elastomer composition.

6. An instrument panel skin comprising the thermoplastic elastomer composition according to claim 1.

## INTERNATIONAL SEARCH REPORT

International application No.

**PCT/JP2023/009772**

### A. CLASSIFICATION OF SUBJECT MATTER

*C08L 53/02*(2006.01)i; *C08L 23/00*(2006.01)i; *C08L 23/08*(2006.01)i
FI:   C08L53/02; C08L23/00; C08L23/08

According to International Patent Classification (IPC) or to both national classification and IPC

### B. FIELDS SEARCHED

Minimum documentation searched (classification system followed by classification symbols)

C08L53/02; C08L23/00; C08L23/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 3-58381 B2 (MITSUBISHI YUKA KK) 05 September 1991 (1991-09-05) claims, p. 5, examples | 1-6 |
| A | JP 7-26105 A (MITSUI PETROCHEM IND LTD) 27 January 1995 (1995-01-27) entire text | 1-6 |
| A | WO 00/61681 A1 (ASAHI KASEI KABUSHIKI KAISHA) 19 October 2000 (2000-10-19) entire text | 1-6 |
| A | JP 2008-19345 A (ASAHI KASEI CHEMICALS CORP) 31 January 2008 (2008-01-31) entire text | 1-6 |
| A | JP 7-11067 A (KURARAY CO LTD) 13 January 1995 (1995-01-13) entire text | 1-6 |
| A | JP 2006-16620 A (MITSUBOSHI BELTING LTD) 19 January 2006 (2006-01-19) entire text | 1-6 |
| A | WO 2018/180371 A1 (MITSUI CHEMICALS, INC.) 04 October 2018 (2018-10-04) entire text | 1-6 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 April 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| JP | 3-58381 | B2 | 05 September 1991 | (Family: none) | | | |
| JP | 7-26105 | A | 27 January 1995 | US<br>whole document<br>EP<br>KR 10-1995-0003338 | 5596042<br><br>634453<br> | A<br><br>A2<br>A | |
| WO | 00/61681 | A1 | 19 October 2000 | US<br>whole document<br>DE | 6384143<br><br>10081095 | B1<br><br>B | |
| JP | 2008-19345 | A | 31 January 2008 | (Family: none) | | | |
| JP | 7-11067 | A | 13 January 1995 | (Family: none) | | | |
| JP | 2006-16620 | A | 19 January 2006 | US<br>whole document<br>EP<br>TW<br>KR 10-2002-0033562 | 2002/0151649<br><br>1201710<br>534921<br> | A1<br><br>A2<br>B<br>A | |
| WO | 2018/180371 | A1 | 04 October 2018 | US<br>whole document<br>EP<br>CN<br>KR 10-2019-0112133 | 2020/0024435<br><br>3604422<br>110461933<br> | A1<br><br>A1<br>A<br>A | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010067564 A
- WO 00061681 A
- JP 2008007589 A
- JP S421967008704 B
- JP S431968006636 B
- JP S631988004841 B
- JP H011989037970 B
- JP H011989053851 B
- JP H021990009041 B
- JP H08109219 A

- JP S361961019286 B
- JP S431968017979 B
- JP S461971032415 B
- JP S491974036957 B
- JP S481973002423 B
- JP S481973004106 B
- JP S561981028925 B
- JP S591984166518 A
- JP S601985186577 A

**Non-patent literature cited in the description**

- **I. M. KOLTHOFF et al.** *J. Polym. Sci.*, 1946, vol. 1, 429